# EUROPÄISCHE PATENTSCHRIFT

(11) **EP 1 378 445 B1**
(45) Veröffentlichungstag und Bekanntmachung des Hinweises auf die Patenterteilung: **30.08.2006**
(21) Anmeldenummer: 03014894.4
(22) Anmeldetag: 01.07.2003
(51) Int. Cl.: B64D 37/02, B64D 37/06

(54) **Verbindungsanordnung zur Verbindung zweier flexibler Tanks eines Luftfahrzeugs**
Connection assembly for connecting two flexible aircraft tanks
Ensemble de connexion pour connecter deux réservoirs d'un aéronef

(30) Priorität: 03.07.2002 DE 10229803
(43) Veröffentlichungstag der Anmeldung: 07.01.2004
(73) Patentinhaber: EUROCOPTER DEUTSCHLAND GmbH, 86609 Donauwörth (DE)
(72) Erfinder: Rodousakis, Eleftherios, 81379 München (DE); Kiowsky, Harald, 82216 Germerswang (DE)
(74) Vertreter: Hummel, Adam

(56) Entgegenhaltungen:
- DE-C- 463 993
- GB-A- 552 722
- GB-A- 664 201
- US-A- 3 035 797
- US-A- 5 123 557

## Beschreibung

Die vorliegende Erfindung betrifft eine Verbindungsanordnung zur lösbaren Verbindung zweier flexibler Tanks eines Luftfahrzeugs.

Bei Luftfahrzeugen, wie beispielsweise Hubschraubern, ist es bekannt, flexible Tanks zu verwenden. Insbesondere aus bauraumtechnischen Gründen werden häufig anstelle eines großen Tanks mehrere kleine Tanks verwendet, welche miteinander verbunden werden. Aufgrund der beengten räumlichen Verhältnisse ist es häufig schwierig, dabei die Montage einer derartigen Vielzahl von Tanks durchzuführen. Darüberhinaus wäre es wünschenswert, beispielsweise um Reparaturen ausführen zu können, einen oder alle Tanks wieder einfach demontieren zu können, um besser an die jeweiligen Reparaturstellen zu gelangen bzw. um mehr Handhabungsfreiraum für die Reparatur zu haben.

US 3 035 797 offenbart eine Verbindungsanordnung, in form eines rohrförmigen Zwischenelementes (14), zum Verbindung zweier Tanks (11) eines Luftfahrzeugs.

Es ist daher Aufgabe der vorliegenden Erfindung, eine Verbindungsanordnung zur Verbindung zweier flexibler Tanks für ein Luftfahrzeug bereitzustellen, welche bei einem einfachen und kostengünstigen Aufbau eine leichte Montage und eine leichte Demontage wenigstens eines flexiblen Tanks ermöglicht.

Diese Aufgabe wird durch eine Verbindungsanordnung mit den Merkmalen des Anspruchs 1 gelöst. Die Unteransprüche zeigen vorteilhafte Weiterbildungen der Erfindung.

Die erfindungsgemäße Verbindungsanordnung zur lösbaren Verbindung zweier flexibler Tanks für ein Luftfahrzeug ermöglicht es, eine Montage bzw. eine Demontage der flexiblen Tanks deutlich zu vereinfachen. Hierzu umfasst die erfindungsgemäße Verbindungsanordnung ein am ersten Tank befestigtes, erstes rohrförmiges Verbindungselement, ein am zweiten Tank befestigtes, zweites rohrförmiges Verbindungselement und eine Rastvorrichtung. Die Rastvorrichtung verbindet das erste und das zweite Verbindungselement lösbar miteinander. Hierbei erfolgt im montierten, d.h. verbundenen, Zustand der Tanks ein Fluidaustausch über das erste und das zweite Verbindungselement zwischen den beiden flexiblen Tanks. Weiterhin ist die Rastvorrichtung im Inneren eines der beiden flexiblen Tanks angeordnet und ist dabei von der Außenseite dieses flexiblen Tanks über den flexiblen Tank betätigbar. Mit anderen Worten wird die Rastvorrichtung mittelbar über den flexiblen Tank betätigt, wobei es nicht möglich ist, die Rastvorrichtung unmittelbar zu berühren, sondern die Rastvorrichtung nur über die flexible Hülle des Tanks zu ertasten und zu betätigen. Ein weiterer Vorteil der erfindungsgemäßen Verbindungsanordnung zwischen zwei Tanks liegt darin, dass der zur Verfügung stehende Bauraum für den Tank in maximaler Weise genutzt werden kann, da es nicht notwendig ist, zwischen den beiden flexiblen Tanks wie im Stand der Technik einen Abstand zu lassen. Durch die Anordnung der Rastvorrichtung im Inneren eines Tanks ist eine engstmögliche Positionierung zweier benachbarter Tanks nebeneinander möglich.

Vorzugsweise steht das erste rohrförmige Verbindungselement im montierten Zustand in das innere des zweiten Tanks vor.

Vorteilhaft ist die Rastvorrichtung als Federelement, insbesondere mit einer Hinterschneidung ausgebildet, wobei das Federelement an einem der ersten oder zweiten Verbindungselemente befestigt ist. Besonders bevorzugt ist die Rastvorrichtung dabei durch zwei Federelemente gebildet, welche an dem ersten rohrförmigen Verbindungselement befestigt sind und um 180° einander gegenüberliegend angeordnet sind. Dadurch kann ein einfaches Greifen, beispielsweise mit Daumen und Zeigefinger von der Außenseite des flexiblen Tanks über diesen ermöglicht werden, da im montierten Zustand die Rastvorrichtung vom flexiblen Tank abgedeckt ist und nicht sichtbar ist.

Um eine einfache und sichere Verbindung des ersten rohrförmigen Verbindungselements am Tank zu ermöglichen, weist das erste Verbindungselement vorzugsweise einen Befestigungsflansch auf, welcher an einem Tankfitting des ersten flexiblen Tanks befestigbar ist.

Um eine möglichst geringe Bauteileanzahl zu erhalten, ist gemäß einer anderen bevorzugten Ausgestaltung der Erfindung das Tankfitting integral mit dem ersten rohrförmigen Verbindungselement gebildet. Mit anderen Worten sind der Tankfitting und das erste Verbindungselement ein einstückiges Bauteil.

Um den flexiblen Tanks eine verbesserte Stabilität zu verleihen, sind die flexiblen Tanks vorzugsweise durch einen Spant getrennt.

Weiterhin bevorzugt ist der zweite flexible Tank unmittelbar am zweiten rohrförmigen Verbindungselement befestigt, wodurch ebenfalls eine besonders geringe Bauteileanzahl erhalten wird.

Um in Axialrichtung des rohrförmigen Verbindungselements möglichst geringen Bauraum zu benötigen, ist das zweite rohrförmige Verbindungselement vorzugsweise derart am zweiten flexiblen Tank befestigt, dass das zweite rohrförmige Verbindungselement in das Innere des Tanks vorsteht.

Weiterhin bevorzugt ist eine Dichtungseinrichtung zwischen dem ersten und dem zweiten rohrförmigen Verbindungselement angeordnet.

Es sei angemerkt, dass es selbstverständlich möglich ist, eine Vielzahl flexibler Tanks mit der erfindungsgemäßen Verbindungsanordnung zu verbinden. Dabei ist vorzugsweise immer an einem flexiblen Tank sowohl ein erstes rohrförmiges Verbindungselement als auch ein zweites rohrförmiges Verbindungselement vorgesehen.

Nachfolgend wird unter Bezugnahme auf die begleitende Zeichnung ein Ausführungsbeispiel der vorliegenden Erfindung beschrieben. In der Zeichnung ist:
- Fig. 1: eine schematische Draufsicht einer Anordnung zweier flexibler Tanks, und
- Fig. 2: eine schematische Schnittansicht einer Verbindungsanordnung gemäß einem Ausführungsbeispiel der vorliegenden Erfindung.

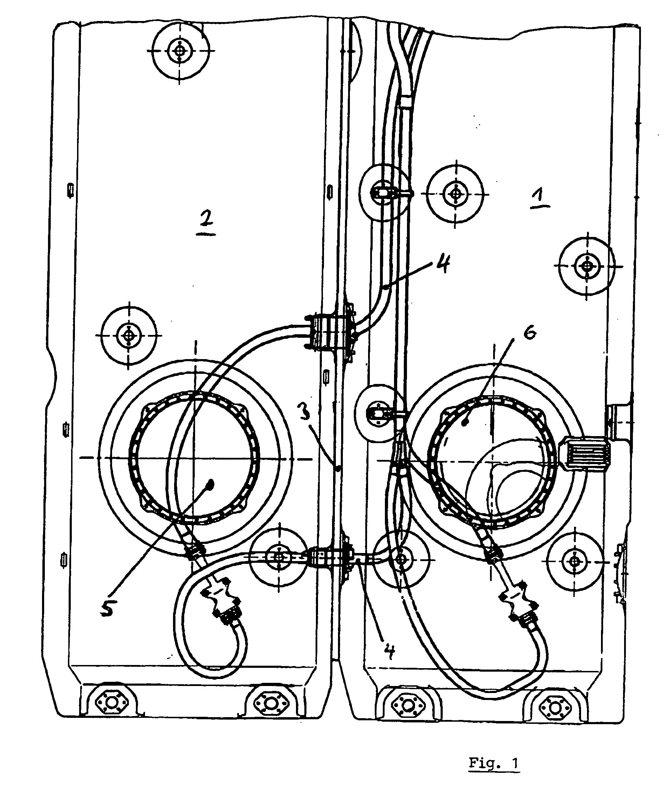

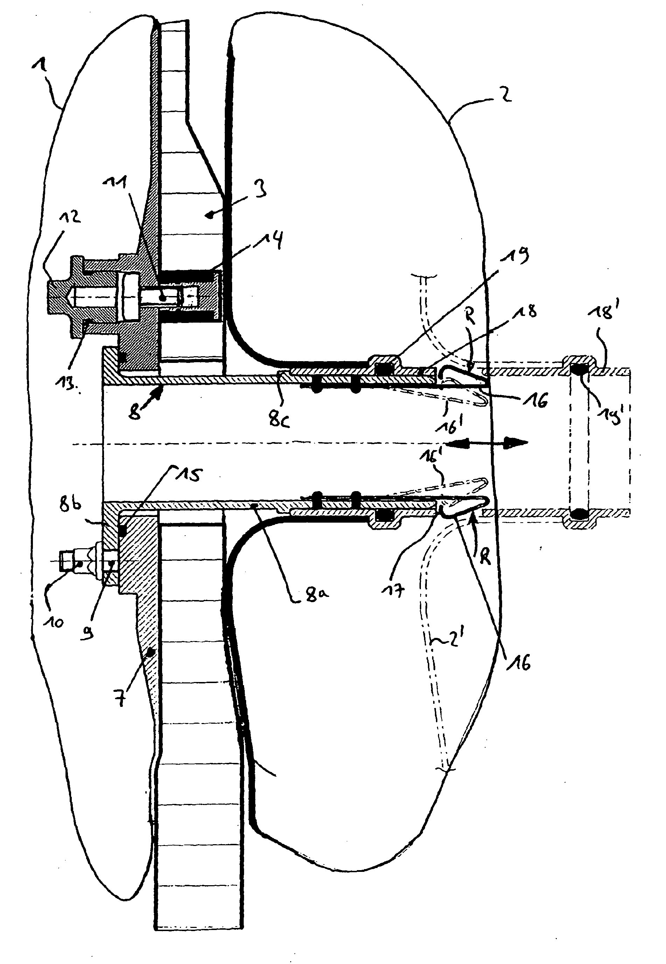

Wie aus den Fig. 1 und 2 ersichtlich ist, sind ein erster flexibler Tank 1 und ein zweiter flexibler Tank 2 für ein Luftfahrzeug nebeneinander angeordnet. Dabei werden die beiden Tanks 1, 2 durch einen Spant 3 voneinander getrennt. Im betankten Zustand legen sich dabei die beiden flexiblen Tanks 1, 2 an den Spant 3 an. Wie in Fig. 1 gezeigt, sind dabei mehrere Kraftstoffleitungen 4 sowie jeweils eine verschließbare Tanköffnung 5 und 6 für jeden Tank 1, 2 vorgesehen.

Die in Fig. 2 im Detail dargestellte erfindungsgemäße Verbindungsanordnung umfasst ein erstes Verbindungselement 8, ein zweites Verbindungselement 18 sowie eine als Feder 16 ausgebildete Rastvorrichtung.

Wie in Fig. 2 gezeigt, besteht das erste Verbindungselement 8 aus einem zylinderförmigen oder rohrförmigen Bereich 8a, einem Flansch 8b und einem Anschlag 8c, welcher an der Außenseite des rohrförmigen Bereichs 8a gebildet ist. Das erste Verbindungselement 8 ist dabei mittels mehrerer Bolzen 9 und Muttern 10 an einem Fitting 7 des ersten Tanks 1 befestigt. Am Fitting 7 ist z.B. mittels Vulkanisieren eine flexible Tankblase des flexiblen Tanks 1 befestigt. Zwischen dem Gummifitting 7 und dem ersten Verbindungselement 8 ist eine Dichtlippe 15 vorgesehen, um ein Austreten von Kraftstoff zu verhindern.

Wie weiter aus Fig. 2 ersichtlich ist, ist der Gummifitting 7 seinerseits an dem Spant 3 mittels einer Schraube 11 und einer Verschraubung 12 mit einem O-Ring 13 zur Abdichtung befestigt. Hierzu ist im Spant 3 ein sog. Insert 14 eingebracht.

Der zweite flexible Tank 2 umfasst ebenfalls eine flexible Tankblase sowie ein zweites Verbindungselement 18. Hierbei ist die Tankblase direkt an das zweite Verbindungselement 18 anvulkanisiert. Dabei ist die Tankblase derart am zweiten Verbindungselement 18 befestigt, dass das zweite Verbindungselement 18 in das Innere des flexiblen Tanks 2 vorsteht. Dadurch wird ermöglicht, dass sich die Tankblase des zweiten Tanks 2 unmittelbar an den Spant 3 anlegen kann und so der vorhandene Bauraum vollständig vom flexiblen Tank 2 ausgefüllt werden kann. Das zweite Verbindungselement 18 ist im Wesentlichen rohrförmig gebildet und weist eine innere ringförmige Ausnehmung auf, die beispielsweise mittels Umformen herstellbar ist, und in der ein weiterer O-Ring 19 angeordnet ist. Der O-Ring 19 dient zur Abdichtung zwischen dem ersten und dem zweiten Verbindungselement 8 und 18.

Wie aus Fig. 2 ersichtlich ist, ist die Feder 16 mit einer Hinterschneidung 17 gebildet, welche verhindert, dass sich im montierten Zustand das zweite Verbindungselement 18 vom ersten Verbindungselement 8 selbstständig löst. In Fig. 2 sind in gestrichelten Linien der zweite flexible Tank 2' mit dem zweiten Verbindungselement 18' im demontierten Zustand dargestellt. Weiterhin sind mit gestrichelten Linien die Position der zusammengedrückten Federn 16' dargestellt, um eine Montage der beiden flexiblen Tanks zu ermöglichen. Wie in Fig. 2 dargestellt, sind die beiden Federn 16 um 180° einander entgegengesetzt am ersten Verbindungselement 8 angeordnet und z.B. aus Federstahl oder Kunststoff hergestellt.

Die Montage der beiden flexiblen Tanks 1 und 2 ist dabei wie folgt. An der Feder 16 ist, wie in Fig. 2 gezeigt, eine zur Außenseite gerichtete Anlaufschräge ausgebildet. Dadurch ist es möglich, dass das zweite Verbindungselement 18 einfach auf das erste Verbindungselement 8 aufgeschoben wird, wobei durch die Anlaufschräge die beiden Federn 16 in die mit dem Bezugszeichen 16' gestrichelt dargestellte Position gelangen. Nachdem das zweite Verbindungselement vollständig über die beiden Federn 16 geschoben wurde, geht die Feder aufgrund ihrer Rückstellkraft wieder in ihre Ausgangsstellung zurück, sodass ein selbsttätiges Lösen des zweiten Verbindungselements 18 vom ersten Verbindungselement 8 nicht möglich ist. Dabei liegt das zweite Verbindungselement 18 am Anschlag 8c des ersten Verbindungselements 8 an. Vorzugsweise sind die Federn 16 dabei derart ausgebildet, dass im montierten Zustand kein Spiel zwischen dem ersten und dem zweiten Verbindungselement 8, 18 in Axialrichtung möglich ist.

Um die Verbindung der zweiten flexiblen Tanks 1 und 2 wieder zu lösen, müssen die beiden Federn 16 in Pfeilrichtung R nach innen gedrückt werden und in die gestrichelte Position 16' gebracht werden. Hierbei kann auf einfache Weise von der Außenseite der Tankblase des zweiten Tanks 2 beispielsweise mittels Daumen und Zeigefinger gleichzeitig auf die beiden Federn 16 gedrückt werden. Aufgrund der Anordnung der Rastvorrichtung im Inneren des zweiten Tanks 2 können die Federn 16 zwar nicht unmittelbar gesehen werden, jedoch können Sie einfach durch die Tankblase des zweiten Tanks 2 hindurch ertastet werden. Dadurch ist eine einfache und schnelle Demontage des zweiten flexiblen Tanks 2 vom ersten flexiblen Tank 1 möglich.

Weiterhin ist die erfindungsgemäße Verbindungsanordnung mit sehr wenigen Bauteilen realisiert, welche auch nur ein geringes Gewicht aufweisen. Besonders bevorzugt werden dabei das erste und das zweite Verbindungselement 8 und 18 aus Aluminium hergestellt. Dadurch kann ein besonders geringes Gesamtgewicht der Verbindunganordnung erreicht werden, was insbesondere für Luftfahrzeuge vorteilhaft ist. Weiterhin wird durch die nach Innen gerichtete Anordnung des zweiten Verbindungselements 18 in den Innenraum zweiten Tanks 2 eine maximale Ausnutzung des vorhandenen Bauraums möglich (vgl. Fig. 2). Die erfindungsgemäße Verbindungsanordnung wird dabei insbesondere in Hubschraubern verwendet.

### Bezugszeichenliste

- 1: erster flexibler Tank
- 2: zweiter flexibler Tank
- 3: Spant
- 4: Leitung
- 5: verschließbare Tanköffnung
- 6: verschließbare Tanköffnung
- 7: Gummifitting
- 8: erstes Verbindungselement
- 8a: zylindrischer Bereich
- 8b: Flansch
- 8c: Anschlag
- 9: Bolzen
- 10: Mutter
- 11: Schraube
- 12: Verschraubung
- 13: O-Ring
- 14: Insert
- 15: Dichtlippe
- 16: Feder
- 17: Hinterschneidung
- 18: zweites Verbindungselement
- 19: O-Ring

## Patentansprüche

1. Verbindungsanordnung zur lösbaren Verbindung eines ersten flexiblen Tanks (1) mit einem zweiten flexiblen Tank (2) eines Luftfahrzeugs, umfassend ein am ersten flexiblen Tank (1) befestigtes erstes rohrförmiges Verbindungselement (8), ein am zweiten flexiblen Tank befestigtes und mit dem ersten rohrförmigen Verbindungselement (8) zusammenpassendes zweites rohrförmiges Verbindungselement (18), eine Rastvorrichtung (16), und eine Dichtungseinrichtung (19), die zwischen dem ersten und dem zweiten rohrförmigen Verbindungselement (8, 18) angeordnet ist, wobei das erste und das zweite Verbindungselement (8, 18) ineinander schiebbar und mittels der Rastvorrichtung (16) lösbar miteinander verbindbar sind, im montierten Zustand die ineinander geschobenen rohrförmigen Verbindungselemente (8, 18) durch die Dichtungseinrichtung (19) gegeneinander abgedichtet sind, so dass ein Fluidaustausch über das erste und das zweite Verbindungselement (8, 18) zwischen dem ersten und dem zweiten flexiblen Tank (1, 2) möglich ist, und die Rastvorrichtung (16) im verbundenen Zustand der flexiblen Tanks (1, 2) im Inneren eines der beiden flexiblen Tanks (1, 2) angeordnet ist und von der Außenseite dieses flexiblen Tanks (1, 2) mittelbar über diesen zu betätigen ist.

2. Verbindungsanordnung nach Anspruch 1,
**dadurch gekennzeichnet, dass**
das erste rohrförmige Verbindungselement (8) im montierten Zustand in das Innere des zweiten flexiblen Tanks (2) vorsteht.

3. Verbindungsanordnung nach Anspruch 1,
**dadurch gekennzeichnet, dass**
die Rastvorrichtung (16) an dem ersten rohrförmigen Verbindungselement (8) angeordnet ist.

4. Verbindungsanordnung nach einem der vorhergehenden Ansprüche,
**dadurch gekennzeichnet, dass**
die Rastvorrichtung (16) als Federanordnung ausgebildet ist.

5. Verbindungsanordnung nach Anspruch 4,
**dadurch gekennzeichnet, dass**
die Federanordnung zwei Federelemente umfasst, welche am ersten rohrförmigen Verbindungselement (8) um 180° versetzt einander gegenüberliegend angeordnet sind.

6. Verbindungsanordnung nach einem der vorhergehenden Ansprüche,
**dadurch gekennzeichnet, dass**
das erste rohrförmige Verbindungselement (8) einen Befestigungsflansch (8b) aufweist, welcher an einem Gummifitting (7) des ersten flexiblen Tanks (1) zu befestigen ist.

7. Verbindungsanordnung nach einem der Ansprüche 1 bis 5,
**dadurch gekennzeichnet, dass**
der erste flexible Tank (1) unmittelbar am ersten rohrförmigen Verbindungselement (8) befestigt ist.

8. Verbindungsanordnung nach einem der vorhergehenden Ansprüche,
**dadurch gekennzeichnet, dass**
der erste flexible Tank (1) und der zweite flexible Tank (2) durch einen Spant (3) getrennt sind.

9. Verbindungsanordnung nach einem der vorhergehenden Ansprüche,
**dadurch gekennzeichnet, dass**
der zweite flexible Tank (2) unmittelbar am zweiten rohrförmigen Verbindungselement (18) befestigt ist.

10. Verbindungsanordnung nach einem der vorhergehenden Ansprüche,
**dadurch gekennzeichnet, dass**
das zweite rohrförmige Verbindungselement (18) derart am zweiten flexiblen Tank (2) befestigt ist, dass das zweite rohrförmige Verbindungselement (18) in das Innere des zweiten flexiblen Tanks (2) vorsteht.

11. Verbindungsanordnung nach einem der vorhergehenden Ansprüche,
**dadurch gekennzeichnet, dass**
die Dichtungseinrichtung (19) zwischen dem ersten und dem zweiten rohrförmigen Verbindungselement (8, 18) ein O-Ring ist.

## Claims

1. A connection arrangement for detachably connecting a first flexible tank (1) to a second flexible tank (2) of an aircraft, comprising a first tubular connection element (8) that is secured to the first flexible tank (1), a second tubular connection element (18) that is secured to the second flexible tank and fits together with the first tubular connection element (8), a latching mechanism (16), and a sealing device (19) that is arranged between the first and the second tubular connection element (8, 18), wherein the first and the second connection element (8, 18) can be pushed into each other and can be connected together in a detachable manner by means of the latching mechanism (16), in the assembled state the tubular connection elements (8, 18) that have been pushed into each other are sealed with respect to each other by means of the sealing device (19) so that a fluid exchange is possible by way of the first and the second connection element (8, 18) between the first and the second flexible tank (1, 2), and in the connected state of the flexible tanks (1, 2) the latching mechanism (16) is arranged in the interior of one of the two flexible tanks (1, 2) and can be actuated from the outside of this flexible tank (1, 2) indirectly by way of the latter.

2. A connection arrangement according to claim 1, **characterised in that** the first tubular connection element (8) protrudes, in the assembled state, into the interior of the second flexible tank (2).

3. A connection arrangement according to claim 1, **characterised in that** the latching mechanism (16) is arranged on the first tubular connection element (8).

4. A connection arrangement according to one of the preceding claims, **characterised in that** the latching mechanism (16) is formed as a spring arrangement.

5. A connection arrangement according to claim 4, **characterised in that** the spring arrangement comprises two spring elements that are arranged on the first tubular connection element (8) so that they are staggered by 180° and lie opposite each other.

6. A connection arrangement according to one of the preceding claims, **characterised in that** the first tubular connection element (8) has a securing flange (8b) that can be secured to a rubber fitting (7) of the first flexible tank (1).

7. A connection arrangement according to one of claims 1 to 5, **characterised in that** the first flexible tank (1) is secured directly to the first tubular connection element (8).

8. A connection arrangement according to one of the preceding claims, **characterised in that** the first flexible tank (1) and the second flexible tank (2) are separated by a rib (3).

9. A connection arrangement according to one of the preceding claims, **characterised in that** the second flexible tank (2) is secured directly to the second tubular connection element (18).

10. A connection arrangement according to one of the preceding claims, **characterised in that** the second tubular connection element (18) is secured to the second flexible tank (2) in such a way that the second tubular connection element (18) protrudes into the interior of the second flexible tank (2).

11. A connection arrangement according to one of the preceding claims, **characterised in that** the sealing device (19) between the first and the second tubular connection element (8, 18) is an O-ring.

## Revendications

1. Dispositif de jonction pour relier de manière amovible un premier réservoir souple (1) à un deuxième réservoir souple (2) d'un aéronef, comprenant
un premier élément de jonction tubulaire (8) fixé au premier réservoir souple (1),
un deuxième élément de jonction tubulaire (18) fixé au deuxième réservoir souple et adapté au premier élément de jonction (8),
un dispositif de blocage (16) et un dispositif d'étanchéité (19) disposé entre le premier et le deuxième élément de jonction tubulaire (8, 18),
le premier et le deuxième élément de jonction tubulaire (8, 18) pouvant être emboîtés l'un dans l'autre et reliés l'un à l'autre de manière amovible au moyen du dispositif de blocage (16),
à l'état monté les éléments de jonction tubulaires (8, 18) emboîtés l'un dans l'autre et étanchés l'un par rapport à l'autre par le dispositif d'étanchéité (19) permettent un échange de fluide entre les premier et deuxième réservoirs souples (1, 2), et
à l'état relié des réservoirs souples (1, 2) le dispositif de blocage (16) disposé à l'intérieur d'un des deux réservoirs souples (1, 2) peut être actionné depuis la face extérieure de ce réservoir souple (1, 2) indirectement par celui-ci.

2. Dispositif de jonction selon la revendication 1,
**caractérisé en ce qu'**
à l'état monté, le premier élément de jonction tubulaire (8) saille à l'intérieur du deuxième réservoir souple (2).

3. Dispositif de jonction selon la revendication 1,
**caractérisé en ce que**
le dispositif de blocage (16) est disposé sur le premier élément de jonction tubulaire (8).

4. Dispositif de jonction selon l'une des revendications précédentes,
**caractérisé en ce que**
le dispositif de blocage (16) est un ensemble de ressorts.

5. Dispositif de jonction selon la revendication 4,
**caractérisé en ce que**
l'ensemble de ressorts comprend deux éléments ressorts disposés de manière décalée de 180° l'un en face de l'autre sur le premier élément de jonction tubulaire (8).

6. Dispositif de jonction selon l'une des revendications précédentes,
**caractérisé en ce que**
le premier élément de jonction tubulaire (8) présente une bride de fixation (8b) fixée à un raccord en caoutchouc (7) du premier réservoir souple (1) .

7. Dispositif de jonction selon l'une quelconque des revendications 1 à 5,
**caractérisé en ce que**
le premier réservoir souple (1) est fixé directement au premier élément de onction tubulaire (8).

8. Dispositif de jonction selon l'une des revendications précédentes,
**caractérisé en ce que**
le premier réservoir souple (1) et le deuxième réservoir flexible (2) sont séparés par un couple (3).

9. Dispositif de jonction selon l'une des revendications précédentes,
**caractérisé en ce que**
le deuxième réservoir souple (2) est directement fixé au deuxième élément de jonction tubulaire (18).

10. Dispositif de jonction selon l'une des revendications précédentes,
**caractérisé en ce que**
le deuxième élément de jonction tubulaire (18) est fixé au deuxième réservoir souple (2) de sorte que le deuxième élément de jonction tubulaire (18) saille à l'intérieur du deuxième réservoir souple (2).

11. Dispositif de jonction selon l'une des revendications précédentes,
**caractérisé en ce que**
le dispositif d'étanchéité (19) entre le premier et le deuxième élément de jonction tubulaire (8, 18) est un joint torique.
